(19) **Europäisches Patentamt**

**European Patent Office**

**Office européen des brevets**

(11) **EP 1 046 615 A1**

(12) **EUROPÄISCHE PATENTANMELDUNG**

(43) Veröffentlichungstag:
25.10.2000 Patentblatt 2000/43

(51) Int. Cl.⁷: **C01D 3/02**

(21) Anmeldenummer: **00107106.7**

(22) Anmeldetag: **06.04.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **19.04.1999 DE 19917610**

(71) Anmelder: **BAYER AG**
**51368 Leverkusen (DE)**

(72) Erfinder: **Bulan, Andreas**
**40764 Langenfeld (DE)**

(54) **Verfahren zum Recycling von Alkalimetallfluoriden bzw. -bifluoriden**

(57)    Verfahren zur Gewinnung von Alkalimetallfluoriden und/oder -bifluoriden aus Abfallmischungen enthaltend mindestens einem Alkalimetallchlorid und/oder mindestens einem Alkalimetallfluorid und/oder -bifluorid sowie gegebenenfalls mindestens eine organische Verbindung, dadurch gekennzeichnet, dass man die Abfallmischung einer thermisch/oxidativen oder extraktiven Vorbehandlung oder einer Kombinationen dieser Vorbehandlungsmethoden unterzieht und anschließend mit Fluorwasserstoff kontaktiert.

EP 1 046 615 A1

Printed by Xerox (UK) Business Services
2.16.7 (HRS)/3.6

**Beschreibung**

Die vorliegende Erfindung betrifft ein Verfahren zur Gewinnung von Alkalimetallfluoriden und/oder -bifluoriden aus Abfallmischungen.

Für das erfindungsgemäße Verfahren besonders geeignete Abfallmischungen sind z.B. solche, wie sie bei Halogenaustauschreaktionen, bei denen an organischen Verbindungen wie z.B. p-Chlornitrobenzol, Chlor-Atome gegen Fluoratome ausgetauscht werden, erhalten werden. Diese Reaktionen werden Halex-Reaktionen (Halex = halogen exchange) genannt. Dabei wird Alkalimetallfluorid und/oder -bifluorid eingesetzt, das im Laufe der Reaktion zu Alkalimetallchlorid umgesetzt wird (vgl. Houben-Weyl, "Methoden der organischen Chemie", 4. Auflage, Band V, Teil 3, 1962, S. 145 ff.; Ullmann's Encyclopedia of Industrial Chemistry, 5th Vol., (1988), A11, S.379).

Schematisch läßt sich die Reaktion wie folgt darstellen,

$$R\text{-}Cl + MeF \rightarrow R\text{-}F + MeCl$$

wobei

R    für einen organischen Rest und

Me    für ein Alkalimetallion steht.

Allerdings verlaufen diese Austauschreaktionen nie quantitativ. In der Regel entsteht neben dem Reaktionsprodukt ein Abfallgemisch, das Alkalimetallchlorid, -fluorid und Reste von organischen Verbindungen enthält. Zur Aufarbeitung wird das Reaktionsprodukt, meist destillativ von der Salzmischung abgetrennt. Zurück bleibt eine Abfallmischung, die Alkalimetallchloride und/oder -bifluoride sowie gegebenenfalls nicht umgesetzte Ausgangsverbindung sowie organische Nebenprodukte enthält.

Diese Abfallmischung aus Alkalimetallchlorid, Alkallmetallfluorid und/oder -bifluorid und Resten von organischen Verbindungen konnte bisher nur deponiert werden. Neben den anfallenden sehr hohen Deponiekosten wird dabei eine nicht unerhebliche Menge nicht umgesetztes Alkalimetallfluorid und/oder -bifluorid verworfen.

Es bestand daher die Aufgabe aus Abfallmischungen, insbesondere solchen, wie sie bei Halogenaustauschreaktionen anfallen, die nicht umgesetzten Alkalimetallfluoride oder -bifluoride wiederzugewinnen und die entstandenen Alkalimetallchloride wieder in die Fluoride umzuwandeln. Die vorliegende Erfindung betrifft also ein Verfahren zur Gewinnung von Alkalimetallfluoriden und/oder -bifluoriden aus Abfallmischungen enthaltend mindestens einem Alkalimetallchlorid und/oder mindestens einem Alkalimetallfluorid und/oder -bifluorid sowie gegebenenfalls mindestens eine organische Verbindung, dadurch gekennzeichnet, dass man die Abfallmischung einer thermisch/oxidativen oder extraktiven Vorbehandlung oder einer Kombination dieser Vorbehandlungsmethoden unterzieht und anschließend mit Fluorwasserstoff kontaktiert.

Die so gewonnenen Alkalimetallfluoride haben im allgemeinen einen Alkalimetallfluorid-Gehalt von grösser 95 Gew.-%, vorzugsweise von 99 Gew.-%, und können z.B. direkt wieder in den Halogenaustauschprozess eingesetzt werden.

Unter Alkalimetallen sollen insbesondere Natrium und Kalium verstanden werden. Als organische Verbindungen sind z.B. halogenierte Aromaten wie p-Chlornitrobenzol sowie Tetrachlorbenzotrifluorid zu verstehen. Die Abfallmischungen enthalten im allgemeinen 30-60 Gew.-% an Alkalimetallchloriden, 10-50 Gew.-% an Alkalimetallfluoriden und/oder -bifluoriden sowie 0 bis 20 Gew.-% an organischen Verbindungen.

Die thermisch/oxidative Behandlung der Abfallmischung erfolgt durch Erhitzen der Abfallmischung auf Temperaturen von 400 bis 1 110°C für 10 sec bis 5 Stunden in Gegenwart von Luft.

Diese thermisch/oxidative Behandlung kann ebenso mit erhöhtem Zusatz von Luft oder Zuführung von elementarem Sauerstoff erfolgen. Dadurch wird die Zeit der Behandlung bzw. die Temperatur erniedrigt.

Die extraktive Behandlung wird wie folgt durchgeführt: Der Abfallstoff wird in handelsüblichen Extraktoren mit einem Lösungsmittel behandelt. Als Lösungsmittel kommen solche in Betracht, in denen Kaliumfluorid bzw. -chlorid unlöslich bzw. nur wenig löslich sind. Die Extraktion erfolgt üblicherweise am Siedepunkt des Lösemittels, kann aber auch bei niedrigeren Temperaturen oder auch unter Druck erfolgen.

Als Lösungsmittel eignen sich z.B. Dimethylketon oder Dichlormethan.

Wird eine Kombination von thermisch/oxidativer Behandlung und extraktiver Behandlung durchgeführt, so empfiehlt es sich zunächst die thermisch/oxidative Behandlung vorzunehmen und im Anschluss daran die extraktive Behandlung durchzuführen.

Nach erfolgter thermisch/oxidativer oder extraktiver Behandlung oder deren Kombination weist die Abfallmischung einen Kohlenstoffgehalt von 0,01 bis 5, vorzugsweise von <1 % auf. Die in der so vorbehandelten Abfallmischung enthaltenen organischen Verbindungen (meist nur noch Kohlenstoff oder höhermolekulare organische Verbindungen) sind in flüssigem Fluorwasserstoff und in Wasser unlöslich.

Die Kontaktierung der Abfallmischung mit Fluorwasserstoff kann bei Temperaturen von -10°C bis 500°C, vorzugsweise von 0° bis 500°C erfolgen. Geeignet ist flüssiger oder gasförmiger Fluorwasserstoff. Bei optimaler Reaktionsführung wird lediglich die stöchiometrische Menge an Fluorwasserstoff benötigt. Je niedriger die Temperatur, desto mehr Fluorwasserstoff wird benötigt. Enthält die thermisch/oxidativ oder extraktiv vorbehandelte Abfallmischung noch Reste von organischen Verbindungen d.h. der Kohlenstoffgehalt liegt bei ca. 1 %, so kann ein Überschuss von Fluorwasserstoff in Höhe von 2 - 10 mol bezogen auf 1 mol Alkalimetall eingesetzt werden und durch Filtration der entstandenen Lösung die eventuell noch vorhandenen in Fluorwasserstoff unlöslichen Verbindungen abgetrennt werden. Ebenso ist das Auflösen der mit Fluorwasserstoff kontaktierten Abfallmischung in Wasser möglich, wobei die Abtrennung der eventuell noch vorhandenen organischen Verunreinigungen durch Filtration im wässrigen System erfolgen kann. Eventuell überschüssiger Fluorwasserstoff kann mit einer entsprechenden Base (Alkalimetallhydroxid oder Alkalimetallcarbonat oder deren wässrigen Lösungen) neutralisiert werden. Anschließend kann die so gewonnene Alkalimetallfluorid bzw. -bifluoridlösung der Weiterverarbeitung z.B. der Trocknung zugeführt werden.

**Beispiel**

Die Abfallmischung der Herstellung von Tetrafluorobenzotrifluorid besitzt folgende Zusammensetzung: 21,3% organische Bestandteile, 34,2 % Kaliumfluorid, 44,5 % Kaliumchlorid. Diese Abfallmischung wurden bei einer Temperatur von 1000°C 3 h lang an Luft behandelt. 95,4 g dieser so behandelten Abfallmischung wurden mit 388 g wasserfreiem Fluorwasserstoff bei 20°C in Kontakt gebracht und ein Teil des Fluorwasserstoff abdestilliert. Der Rückstand wurde in Wasser aufgelöst und filtriert, der noch vorhandene Fluorwasserstoff mit Kalilauge neutralisiert. Die Kaliumfluoridlösung wurde eingedampft. Der Chlorid-Gehalt des Kaliumfluorids betrug weniger als 10 ppm, organische Verbindungen konnten nicht nachgewiesen werden, der Kohlenstoffgehalt betrug weniger als 0,2 Gew.%.

**Patentansprüche**

1.  Verfahren zur Gewinnung von Alkalimetallfluoriden und/oder -bifluoriden aus Abfallmischungen enthaltend mindestens einem Alkalimetallchlorid und/oder mindestens einem Alkalimetallfluorid und/oder -bifluorid sowie gegebenenfalls mindestens eine organische Verbindung, dadurch gekennzeichnet, dass man die Abfallmischung einer thermisch/oxidativen oder extraktiven Vorbehandlung oder einer Kombinationen dieser Vorbehandlungsmethoden unterzieht und anschließend mit Fluorwasserstoff kontaktiert.

2.  Verfahren gemäß Anspruch 1, dadurch gekennzeichnet, dass die Abfallmischungen im allgemeinen 30-60 Gew.-% an Alkalimetallchloriden, 10-50 Gew.-% an Alkalimetallfluoriden und/oder -bifluoriden sowie 0 bis 20 Gew.-% an organischen Verbindungen enthalten.

3.  Verfahren gemäß Anspruch 1 und 2, dadurch gekennzeichnet, dass die thermisch/oxidative Behandlung der Abfallmischung durch Erhitzen der Abfallmischung auf Temperaturen von 400 bis 1 110°C für 10 sec bis 5 Stunden in Gegenwart von Luft erfolgt.

4.  Verfahren gemäß den Ansprüchen 1 bis 3, dadurch gekennzeichnet, dass die extraktive Behandlung in einem Extraktor, unter Verwendung eines Lösungsmittels, in dem die Alkalimetallchloride, -fluoride und -bifluoride unlöslich oder wenig löslich sind, erfolgt.

5.  Verfahren gemäß den Ansprüchen 1 bis 4, dadurch gekennzeichnet, dass es sich bei dem Alkalimetall um Kalium handelt.

6.  Verfahren gemäß den Ansprüchen 1 bis 5, dadurch gekennzeichnet, dass die Abfallmischung nach erfolgter thermisch/oxidativer oder extraktiver Behandlung oder deren Kombination einen Kohlenstoffgehalt von 0,01 bis 5 % aufweist.

7.  Verfahren gemäß Ansprüchen 1 bis 6, dadurch gekennzeichnet, dass die Kontaktierung der vorbehandelten Abfallmischung mit Fluorwasserstoff bei Temperaturen von -10°C bis 500°C erfolgt.

Europäisches Patentamt

**EUROPÄISCHER RECHERCHENBERICHT**

Nummer der Anmeldung

EP 00 10 7106

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.CL7) |
|---|---|---|---|
| A | US 3 808 322 A (LAM H ET AL) 30. April 1974 (1974-04-30) * Anspruch 1 * | 1 | C01D3/02 |
| A | US 4 793 936 A (LEFRANCOIS PHILIP A ET AL) 27. Dezember 1988 (1988-12-27) * Spalte 1, Zeile 41 - Zeile 63; Anspruch 1 * | 1,4 | |
| A | R.J. MEYER, E.H. PIETSCH: "Natriumhalogenide, Natriumfluorid NaF" GMELINS HANDBUCH DER ANORGANISCHEN CHEMIE, Bd. 21, Nr. Ergänzungsband Lieferung 1, 1964, Seiten 119-120, XP002143445 Verlag Chemie, Weinheim * das ganze Dokument * | 1,7 | |

| | RECHERCHIERTE SACHGEBIETE (Int.CL7) |
|---|---|
| | C01D |

Der vorliegende Recherchenbericht wurde für alle Patentansprüche erstellt

| Recherchenort | Abschlußdatum der Recherche | Prüfer |
|---|---|---|
| DEN HAAG | 25. Juli 2000 | Siebel, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 00 10 7106

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-07-2000

| Im Recherchenbericht angeführtes Patentdokument | Datum der Veröffentlichung | Mitglied(er) der Patentfamilie | Datum der Veröffentlichung |
|---|---|---|---|
| US 3808322 A | 30-04-1974 | KEINE | |
| US 4793936 A | 27-12-1988 | KEINE | |

Für nähere Einzelheiten zu diesem Anhang : siehe Amtsblatt des Europäischen Patentamts, Nr.12/82

EPO FORM P0461